(19)

Europäisches Patentamt
European Patent Office
Office européen des brevets

(11)  **EP 4 393 571 A1**

(12)  # EUROPEAN PATENT APPLICATION
published in accordance with Art. 153(4) EPC

(43)  Date of publication:
**03.07.2024 Bulletin 2024/27**

(21)  Application number: **22861074.7**

(22)  Date of filing: **01.08.2022**

(51)  International Patent Classification (IPC):
**B01D 69/00** (2006.01)    **B01D 71/52** (2006.01)
**B01D 71/56** (2006.01)    **B01D 53/22** (2006.01)

(52)  Cooperative Patent Classification (CPC):
**B01D 53/22; B01D 69/00; B01D 71/52;
B01D 71/56;** Y02C 20/40

(86)  International application number:
**PCT/JP2022/029554**

(87)  International publication number:
**WO 2023/026783 (02.03.2023 Gazette 2023/09)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30)  Priority: **25.08.2021 JP 2021136963**

(71)  Applicant: **NITTO DENKO CORPORATION
Ibaraki-shi
Osaka 567-8680 (JP)**

(72)  Inventors:
• **TANI, Kensuke**
  **Ibaraki-shi, Osaka 567-8680 (JP)**
• **IHARA, Terukazu**
  **Ibaraki-shi, Osaka 567-8680 (JP)**

(74)  Representative: **Hoffmann Eitle
Patent- und Rechtsanwälte PartmbB
Arabellastraße 30
81925 München (DE)**

(54)  ## GAS SEPARATION SYSTEM AND METHOD FOR SEPARATING MIXED GAS

(57)    The present invention provides a gas separation system suitable for separating a gas mixture efficiently. A gas separation system 100 of the present invention includes: a first separation membrane 11 that separates a gas mixture 70 into a first permeated gas 80 and a first non-permeated gas 81; and a second separation membrane 21 that separates the first non-permeated gas 81 into a second permeated gas 90 and a second non-permeated gas 91. The gas mixture 70 contains a gas A and a gas B different from the gas A. The first separation membrane 11 allows the gas A to preferentially permeate therethrough. The second separation membrane 21 allows the gas B to preferentially permeate therethrough. A membrane area of the first separation membrane 11 is smaller than a membrane area of the second separation membrane 21. The gas separation system 100 recovers each of the second permeated gas 90 and the second non-permeated gas 91.

EP 4 393 571 A1

FIG.1

**Description**

TECHNICAL FIELD

The present invention relates to a gas separation system and a method for separating a gas mixture.

BACKGROUND ART

At a chemical plant or the like producing a chemical product, a gas mixture containing carbon dioxide, hydrogen, etc. is discharged, for example. From the viewpoints of environmental regulation, effective use of resources, etc., it is desirable to separate each component from the gas mixture and recover them.

A membrane separation method has been developed as a method for separating each component from a gas mixture. The membrane separation method allows an efficient separation of each component with a suppressed operation cost, compared with an absorption method according to which a specific component contained in a gas mixture is absorbed by an absorbent to be separated.

In the membrane separation method, a gas separation system created by combining a plurality of separation membranes is used in some cases. For example, Patent Literature 1 discloses a gas production system including a carbon dioxide separation membrane and a hydrogen separation membrane. Patent Literature 1 describes that a produced gas containing hydrogen and carbon dioxide is processed by the carbon dioxide separation membrane and a non-permeated gas not having permeated through the carbon dioxide separation membrane is further processed by the hydrogen separation membrane. In the gas production system of Patent Literature 1, carbon dioxide having permeated through the carbon dioxide separation membrane and hydrogen having permeated through the hydrogen separation membrane are each recovered as a product gas.

CITATION LIST

Patent Literature

Patent Literature 1: JP 2018-162184 A

SUMMARY OF INVENTION

Technical Problem

In a conventional gas separation system, in order to improve a recovery rate of each component separated from a gas mixture, it is necessary to increase significantly a membrane area of a separation membrane included in the gas separation system. However, the increase of the membrane area of the separation membrane not only raises the production cost of the separation membrane but also tends to lower a content (purity) of a target component in a permeated gas having permeated through the separation membrane.

Therefore, the present invention is intended to provide a gas separation system suitable for separating a gas mixture efficiently.

Solution to Problem

The present invention provides a gas separation system including:

a first separation membrane that separates a gas mixture into a first permeated gas and a first non-permeated gas; and
a second separation membrane that separates the first non-permeated gas into a second permeated gas and a second non-permeated gas, wherein
the gas mixture contains a gas A and a gas B different from the gas A,
the first separation membrane allows the gas A to preferentially permeate therethrough,
the second separation membrane allows the gas B to preferentially permeate therethrough,
a membrane area of the first separation membrane is smaller than a membrane area of the second separation membrane, and
the gas separation system recovers each of the second permeated gas and the second non-permeated gas.

The present invention further provides a method for separating a gas mixture, including:

a first separation step of separating, by a first separation membrane that allows a gas A to preferentially permeate therethrough, a gas mixture containing the gas A and a gas B different from the gas A into a first permeated gas and a first non-permeated gas;

a second separation step of separating, by a second separation membrane that allows the gas B to preferentially permeate therethrough, the first non-permeated gas into a second permeated gas and a second non-permeated gas; and

a recovery step of recovering each of the second permeated gas and the second non-permeated gas, wherein a membrane area of the first separation membrane is smaller than a membrane area of the second separation membrane.

Advantageous Effects of Invention

The present invention can provide a gas separation system suitable for separating a gas mixture efficiently.

BRIEF DESCRIPTION OF DRAWINGS

FIG. 1 is a schematic configuration diagram of a gas separation system according to one embodiment of the present invention.

FIG. 2 is a schematic cross-sectional view showing an example of a first separation membrane unit.

FIG. 3A is a cross-sectional view showing an example of a first separation membrane.

FIG. 3B is a cross-sectional view showing another example of the first separation membrane.

FIG. 4 is a schematic cross-sectional view showing an example of a second separation membrane unit.

FIG. 5 is a schematic cross-sectional view showing another example of the first separation membrane unit.

FIG. 6 is a configuration diagram for explaining a gas separation system of models 2 and 5.

FIG. 7 is a configuration diagram for explaining a gas separation system of model 4.

DESCRIPTION OF EMBODIMENTS

A gas separation system according to a first aspect of the present invention includes:

a first separation membrane that separates a gas mixture into a first permeated gas and a first non-permeated gas; and

a second separation membrane that separates the first non-permeated gas into a second permeated gas and a second non-permeated gas, wherein

the gas mixture contains a gas A and a gas B different from the gas A,

the first separation membrane allows the gas A to preferentially permeate therethrough,

the second separation membrane allows the gas B to preferentially permeate therethrough,

a membrane area of the first separation membrane is smaller than a membrane area of the second separation membrane, and

the gas separation system recovers each of the second permeated gas and the second non-permeated gas.

According to a second aspect of the present invention, for example, in the gas separation system according to the first aspect, a ratio of the membrane area of the first separation membrane with respect to the membrane area of the second separation membrane is 10/90 or less.

According to a third aspect of the present invention, for example, in the gas separation system according to the first or second aspect, a condition (i) the gas A is hydrogen and the gas B is carbon dioxide, or a condition (ii) the gas A is carbon dioxide and the gas B is hydrogen holds.

According to a fourth aspect of the present invention, for example, in the gas separation system according to any one of the first to third aspects, a content of the gas B in the second permeated gas is 70 vol% or more, and a content of the gas A in the second non-permeated gas is 70 vol% or more.

According to a fifth aspect of the present invention, for example, in the gas separation system according to any one of the first to fourth aspects, a recovery rate of the gas B by the second permeated gas is 70% or more, and a recovery rate of the gas A by the second non-permeated gas is 60% or more.

According to a sixth aspect of the present invention, for example, in the gas separation system according to any one of the first to fifth aspects, a ratio of a volume of the gas A with respect to a total value of the volume of the gas A and a volume of the gas B in the gas mixture is 25 to 75 vol%.

According to a seventh aspect of the present invention, for example, the gas separation system according to any one of the first to sixth aspects further includes: a first separation membrane unit that accommodates the first separation membrane; a gas mixture feed passage connected to the first separation membrane unit and configured to supply the gas mixture to the first separation membrane unit; and a pressurizing device that is provided to the gas mixture feed passage and increases a pressure of the gas mixture.

According to an eighth aspect of the present invention, for example, the gas separation system according to any one of the first to seventh aspects further includes: a second separation membrane unit that accommodates the second separation membrane; a first recovery portion that recovers the second permeated gas; and a first recovery passage connected to the second separation membrane unit and the first recovery portion and configured to deliver the second permeated gas to the first recovery portion.

According to a ninth aspect of the present invention, for example, the gas separation system according to any one of the first to eighth aspects further includes: a second separation membrane unit that accommodates the second separation membrane; a second recovery portion that recovers the second non-permeated gas; and a second recovery passage connected to the second separation membrane unit and the second recovery portion and configured to deliver the second non-permeated gas to the second recovery portion.

According to a tenth aspect of the present invention, for example, in the gas separation system according to any one of the first to ninth aspects, one of the first separation membrane and the second separation membrane includes a metal layer including a metal.

According to an eleventh aspect of the present invention, for example, in the gas separation system according to any one of the first to tenth aspects, one of the first separation membrane and the second separation membrane includes a separation functional layer including a polyether block amide resin or an ionic liquid.

A method for separating a gas mixture according to a twelfth aspect of the present invention includes:

a first separation step of separating, by a first separation membrane that allows a gas A to preferentially permeate therethrough, a gas mixture containing the gas A and a gas B different from the gas A into a first permeated gas and a first non-permeated gas;
a second separation step of separating, by a second separation membrane that allows the gas B to preferentially permeate therethrough, the first non-permeated gas into a second permeated gas and a second non-permeated gas; and
a recovery step of recovering each of the second permeated gas and the second non-permeated gas, wherein
a membrane area of the first separation membrane is smaller than a membrane area of the second separation membrane.

The present invention will be described in detail below. The following description is not intended to limit the present invention to a specific embodiment.

<Gas Separation System>

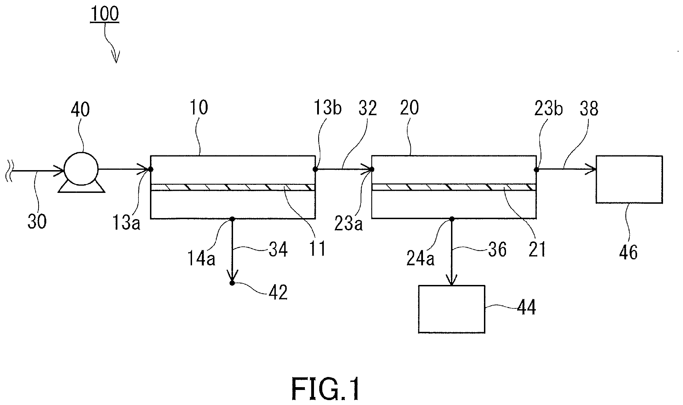

As shown in FIG. 1, a gas separation system 100 of the present embodiment includes a first separation membrane 11 and a second separation membrane 21. Specifically, the gas separation system 100 includes a first separation membrane unit 10 that accommodates the first separation membrane 11, and a second separation membrane unit 20 that accommodates the second separation membrane 21. The first separation membrane unit 10 is a membrane separation device that separates a gas mixture using the first separation membrane 11. The first separation membrane 11 can separate the gas mixture into a first permeated gas and a first non-permeated gas. The second separation membrane unit 20 is a membrane separation device that separates, using the second separation membrane 21, the first non-permeated gas discharged from the first separation membrane unit 10. The second separation membrane 21 can separate the first non-permeated gas into a second permeated gas and a second non-permeated gas.

The gas mixture to be processed in the first separation membrane unit 10 contains a gas A and a gas B different from the gas A. Examples of each of the gas A and the gas B include hydrogen and carbon dioxide. In one example, a condition (i) the gas A is hydrogen and the gas B is carbon dioxide, or a condition (ii) the gas A is carbon dioxide and the gas B is hydrogen holds.

The first separation membrane 11 allows the gas A to preferentially permeate therethrough. Therefore, the first permeated gas separated by the first separation membrane 11 has a content of the gas A higher than that in the gas mixture and a content of the gas B lower than that in the gas mixture. In contrast, the first non-permeated gas has a content of the gas A lower than that in the gas mixture and a content of the gas B higher than that in the gas mixture.

The second separation membrane 21 allows the gas B to preferentially permeate therethrough. Therefore, the second permeated gas separated by the second separation membrane 21 has a content of the gas B higher than that in the first non-permeated gas and a content of the gas A lower than that in the first non-permeated gas. In contrast, the second non-permeated gas has a content of the gas B lower than that in the first non-permeated gas and a content of the gas A higher than that in the first non-permeated gas.

In the gas separation system 100, a membrane area M1 of the first separation membrane 11 is smaller than a membrane area M2 of the second separation membrane 21. According to the configuration of the gas separation system 100, it tends to be possible, by recovering each of the second permeated gas and the second non-permeated gas, to recover each of the gas A and the gas B at a high purity and a high recovery rate without increasing significantly a total value of the membrane area M1 of the first separation membrane 11 and the membrane area M2 of the second separation membrane 21. Thus, the gas separation system 100 of the present embodiment is suitable for separating the gas mixture efficiently.

A ratio M1/M2 of the membrane area M1 of the first separation membrane 11 with respect to the membrane area M2 of the second separation membrane 21 is, for example, 40/60 or less, preferably 25/75 or less, and more preferably 10/90 or less, and it may be 8/92 or less, or 5/95 or less. The lower limit of the ratio M1/M2 is, for example, but not particularly limited to, 0.5/99.5.

The gas separation system 100 further includes a gas mixture feed passage 30. The gas mixture feed passage 30 is a passage connected to a gas mixture inlet (an inlet 13a) of the first separation membrane unit 10 and configured to supply the gas mixture to the first separation membrane unit 10 from, for example, a tank (not shown) storing the gas mixture. The gas mixture feed passage 30 may be connected directly to a source of the gas mixture and may be configured to supply continuously the gas mixture to the first separation membrane unit 10 from the source. The gas mixture feed passage 30 is provided, for example, with a pressurizing device 40 that increases a pressure of the gas mixture. Examples of the pressurizing device 40 include a compressor, a blower, and a back pressure valve. The pressurizing device 40 can pressurize a feed-side space of the first separation membrane unit 10 by increasing the pressure of the gas mixture.

The gas mixture feed passage 30 may be provided with a heat exchanger (not shown) between the pressurizing device 40 and the first separation membrane unit 10. The heat exchanger cools the gas mixture whose pressure has been increased by the pressurizing device 40, for example. The heat exchanger is, for example, a gas-liquid heat exchanger that causes heat exchange between a cooling medium, such as an antifreeze, and the gas mixture, and is typically a fin tube heat exchanger.

The gas separation system 100 further includes a non-permeated gas feed passage 32. The non-permeated gas feed passage 32 is a passage connected to a non-permeated gas outlet (an outlet 13b) of the first separation membrane unit 10 and a non-permeated gas inlet (an inlet 23a) of the second separation membrane unit 20, and configured to supply the first non-permeated gas from the first separation membrane unit 10 to the second separation membrane unit 20. The non-permeated gas feed passage 32 may not be provided with a tank, such as a collector that collects the first non-permeated gas, or an opening and closing valve that opens and closes the passage. Such a configuration makes it possible to supply continuously the first non-permeated gas discharged from the first separation membrane unit 10 to the second separation membrane unit 20, and to easily increase an amount of the gas mixture to be processed per unit time. In one example, the non-permeated gas feed passage 32 may be composed only of a pipe.

The gas separation system 100 further includes a discharge passage 34. The discharge passage 34 is a passage connected to a permeated gas outlet (an outlet 14a) of the first separation membrane unit 10 and configured to discharge the first permeated gas from the first separation membrane unit 10. In the discharge passage 34, an opening (a discharge outlet 42) for discharging the first permeated gas from the discharge passage 34 is formed. The gas separation system 100 does not recover but discards the first permeated gas, for example. However, the discharge passage 34 may be connected to the later-described second recovery portion 46 so that the first permeated gas is recovered by the second recovery portion 46. The discharge passage 34 may be connected to the gas mixture feed passage 30 so that the first permeated gas is recycled.

The gas separation system 100 further includes a first recovery passage 36 and a first recovery portion 44. The first recovery passage 36 is a passage connected to a permeated gas outlet (an outlet 24a) of the second separation membrane unit 20 and an inlet of the first recovery portion 44, and configured to deliver the second permeated gas from the second separation membrane unit 20 to the first recovery portion 44. The first recovery portion 44 recovers the second permeated gas delivered from the second separation membrane unit 20 and can, for example, store the second permeated gas. The first recovery portion 44 is, for example, a tank that stores the second permeated gas.

The gas separation system 100 further includes a second recovery passage 38 and a second recovery portion 46. The second recovery passage 38 is a passage connected to a non-permeated gas outlet (an outlet 23b) of the second separation membrane unit 20 and an inlet of the second recovery portion 46, and configured to deliver the second non-permeated gas from the second separation membrane unit 20 to the second recovery portion 46. The second recovery portion 46 recovers the second non-permeated gas delivered from the second separation membrane unit 20 and can, for example, store the second non-permeated gas. The second recovery portion 46 is, for example, a tank that stores the second non-permeated gas.

The second recovery passage 38 may be provided with a decompression device and a heat exchanger (not shown). The decompression device can decrease, for example, a pressure of the second non-permeated gas to an atmospheric pressure (101 kPa, for example) in an external environment. Examples of the decompression device include a decompression valve. The heat exchanger is positioned between the decompression device and the second recovery portion 46, for example. The heat exchanger heats the second non-permeated gas whose pressure has been decreased by the decompression device, for example. The heat exchanger is, for example, a gas-liquid heat exchanger that causes heat exchange between a heat medium, such as hot water, and the second non-permeated gas, and is typically a fin tube heat exchanger.

Each passage of the gas separation system 100 is composed of, for example, a metal or resin pipe unless otherwise noted.

The gas separation system 100 may further include a controller (not shown) that controls each member of the gas separation system 100. The controller is, for example, a DSP (Digital Signal Processor) including an A/D conversion circuit, an input/output circuit, an arithmetic circuit, a storage device, etc. A program for operating properly the gas separation system 100 is stored in the controller.

The gas separation system 100 of the present embodiment is a continuous-type system, for example. In the present description, the continuous-type system means a system that can process the gas mixture continuously without closing, by using an opening and closing valve, etc., the passages included in the gas separation system 100. In other words, the gas separation system 100 can process the gas mixture in the first separation membrane unit 10 as well as process immediately, in the second separation membrane unit 20, the first non-permeated gas obtained in the first separation membrane unit 10 without collecting the first non-permeated gas into a tank, etc. As just described above, the gas separation system 100 of the present embodiment can be operated continuously. The gas separation system 100 that functions as a continuous-type system is suitable for applications in which a gas mixture is supplied continuously, for processing of an emission gas, and the like.

[First Separation Membrane Unit]

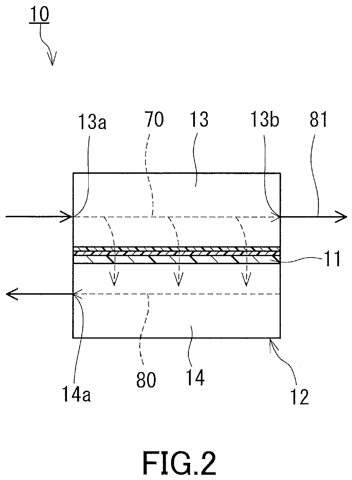

As shown in FIG. 2, the first separation membrane unit 10 includes the first separation membrane 11 and a tank 12. The tank 12 has a first chamber 13 and a second chamber 14. A space in the first chamber 13 corresponds to a feed-side space and a space in the second chamber 14 corresponds to a permeation-side space. The first separation membrane 11 is disposed in the tank 12. In the tank 12, the first separation membrane 11 separates the first chamber 13 and the second chamber 14 from each other. The first separation membrane 11 extends from one of a pair of wall surfaces of the tank 12 to the other.

The first chamber 13 has the inlet 13a and the outlet 13b. The second chamber 14 has the outlet 14a. The inlet 13a of the first chamber 13 is an opening for supplying a gas mixture 70 to the first separation membrane unit 10. The outlet 14a of the second chamber 14 is an opening for discharging, from the first separation membrane unit 10, a first permeated gas 80 obtained by allowing the gas mixture 70 to permeate through the first separation membrane 11. The outlet 13b of the first chamber 13 is an opening for discharging, from the first separation membrane unit 10, the gas mixture 70 (a first non-permeated gas 81) not having permeated through the first separation membrane 11. The inlet 13a, the outlet 13b, and the outlet 14a are formed, for example, in wall surfaces of the tank 12.

(First Separation Membrane)

The first separation membrane 11 allows the gas A contained in the gas mixture 70 to preferentially permeate therethrough. Hereinafter, the first separation membrane 11 in the case where the gas A is hydrogen, that is, the first separation membrane 11 that allows hydrogen to preferentially permeate therethrough, will be described. In the present description, a separation membrane that allows hydrogen to preferentially permeate therethrough may be referred to as a "hydrogen permeable membrane."

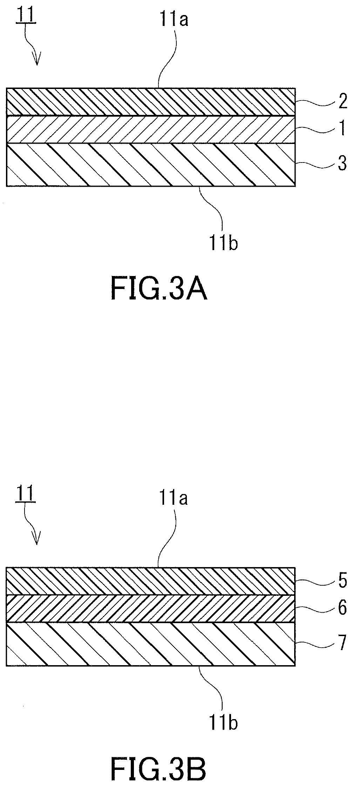

As shown in FIG. 3A, the first separation membrane 11 as the hydrogen permeable membrane includes, for example, a metal layer 1 including a metal. The first separation membrane 11 may further include a support member 3 supporting the metal layer 1 and a coat layer 2 coating the metal layer 1. For example, the metal layer 1 is disposed between the coat layer 2 and the support member 3, and is in direct contact with each of the coat layer 2 and the support member 3. Note that an adhesive may be disposed between the metal layer 1 and the support member 3. Another support member may further be disposed between the metal layer 1 and the coat layer 2.

«Metal Layer»

The metal layer 1 is a layer that allows hydrogen to preferentially permeate therethrough. The metal included in the metal layer 1 is not particularly limited as long as it has, independently or by being alloyed, a function of allowing hydrogen to permeate therethrough. Examples of the metal include Pd, Nb, V, Ta, Ni, Fe, Al, Cu, Ru, Re, Rh, Au, Pt, Ag, Cr, Co, Sn, Zr, Y, Ce, Ti, Ir, Mo, and an alloy including two or more of these metals.

The metal layer 1 is preferably an alloy layer including an Pd alloy. Another metal forming the Pd alloy is not particularly limited, and it is preferably an element in Group 11, and more preferably at least one selected from the group consisting of Au, Ag, and Cu. The metal layer 1 preferably includes a Pd-Au alloy. A content of the element in Group 11 in the Pd alloy is preferably 20 to 65 mol%, more preferably 30 to 65 mol%, still more preferably 30 to 60 mol%, and particularly preferably 40 to 60 mol%. The alloy layer including a Pd-Ag alloy having an Ag content of 20 mol% or more, a Pd-Cu alloy having a Cu content of 30 mol% or more, or a Pd-Au alloy having an Au content of 20 mol% or more is less likely to be embrittled by hydrogen even in a low temperature region of approximately 60°C or lower. The Pd alloy may include a metal in Group IB and/or a metal in Group IIIA.

The Pd alloy may be an alloy composed of three or more components instead of the above-mentioned alloy composed of two components. Examples of the alloy composed of three or more components include Pd-Au-Ag, Pd-Au-Cu, and Pd-Au-Ag-Cu. For example, in the case of a multicomponent alloy including Pd, Au, and an additional metal(s), a total value of a content of Au and a content(s) of the additional metal(s) in the alloy is preferably 55 mol% or less, more preferably 50 mol% or less, still more preferably 45 mol% or less, and particularly preferably 40 mol% or less.

The metal layer 1 is composed substantially of a metal, for example. In the present description, the phrase "composed substantially of" means exclusion of other component that alters essential characteristics of a material referred to, and for example means that 95 wt% or more or even 99 wt% or more is composed of the material.

The metal layer 1 can be produced by a method such as a rolling method, a spattering method, a vacuum deposition method, an ion plating method, and a plating method. The rolling method is suitable for producing the metal layer 1 that is relatively thick. The spattering method is suitable for producing the metal layer 1 that is relatively thin.

The rolling method may be hot rolling or cold rolling. The rolling method is a method in which a metal is stretched into a membranous shape while a pressure is applied to the metal using one pair or a plurality of pairs of rolls. A thickness of the metal layer 1 obtained by the rolling method is preferably 5 to 50 $\mu$m, and more preferably 10 to 30 $\mu$m. When the thickness of the metal layer 1 is 5 $\mu$m or more, it is possible to suppress occurrence of pinholes or cracks at the time of production, and also to suppress deformation when hydrogen is occluded. When the thickness of the metal layer 1 is 50 $\mu$m or less, it is possible to realize sufficient hydrogen permeability of the metal layer 1 while suppressing the production cost of the metal layer 1.

The spattering method can be performed in the following manner using a sputtering apparatus of, for example, parallel plate type, single wafer type, pass-through type, DC sputtering, RF sputtering, or the like. First, a substrate is put in a sputtering apparatus in which a metal target is placed. Next, an inside of the sputtering apparatus is evacuated and an Ar gas pressure is adjusted to a specified value. A predetermined sputtering current is applied to the metal target to form a metal membrane on the substrate. The metal membrane is peeled off from the substrate to obtain the metal layer 1. As the metal target, one, or two or more targets can be used depending on a composition of the metal layer 1 to be produced. Examples of the substrate used in the spattering method include a glass plate, a ceramic plate, a silicon wafer, and a metal plate including aluminum, stainless steel, etc. According to the spattering method, it is also possible to form the metal layer 1 directly on the support member 3.

A thickness of the metal layer 1 obtained by the spattering method is preferably 0.01 to 5 $\mu$m, and more preferably 0.05 to 2 $\mu$m. When the thickness of the metal layer 1 is 0.01 $\mu$m or more, it is possible to suppress occurrence of pinholes at the time of production and to obtain sufficient mechanical strength. Also, when the thickness of the metal layer 1 is 0.01 $\mu$m or more, the metal layer 1 is less likely to be damaged when being peeled off from the substrate, and tends to be easy to handle after being peeled off. When the thickness of the metal layer 1 is 5 $\mu$m or less, it is possible to produce the metal layer 1 in a short time and to suppress the production cost.

<<Coat Layer>>

A material of the coat layer 2 is not particularly limited and examples thereof include a fluorine-based compound, a rubber-based polymer, a silicone-based polymer, a urethane-based polymer, and a polyester-based polymer. Preferred is at least one selected from the group consisting of a fluorine-based compound, a rubber-based polymer, and a silicone-based polymer.

Examples of the fluorine-based compound include: a fluoroalkyl group-containing compound such as fluoroalkyl carboxylate, fluoroalkyl quarternary ammonium salt, or a fluoroalkyl ethylene oxide adduct; a perfluoroalkyl group-containing compound such as perfluoroalkyl carboxylate, perfluoroalkyl quaternary ammonium salt, or a perfluoroalkyl ethylene oxide adduct; a fluorine-based polymer such as a tetrafluoroethylene/hexafluoropropylene copolymer, a tetrafluoroethylene/perfluoroalkyl vinyl ether copolymer, a tetrafluoroethylene polymer, a vinylidene fluoride/tetrafluoroethylene copolymer, a vinylidene fluoride/hexafluoropropylene copolymer, a fluorine-containing (meth)acrylic ester polymer, a fluorine-containing (meth)acrylic acid alkyl ester polymer, or a copolymer of fluorine-containing (meth)acrylic ester and another monomer; and fluorine-containing (meth)acrylic ester. As the fluorine-based compound, "DURASURF" series available from Harves Co., Ltd., "OPTOOL" series available from DAIKIN INDUSTRIES, LTD., "KY-100" series available from Shin-Etsu Chemical Co., Ltd., or the like may be used.

Examples of the rubber-based polymer include natural rubber, styrenebutadiene rubber, acrylonitrile-butadiene rubber, polychloroprene rubber, polyisoprene rubber, polybutadiene rubber, ethylene propylene rubber, ethylene-propylene-diene terpolymer rubber, chlorosulphonated polyethylene rubber, and ethylene-vinyl acetate copolymer rubber. As the rubber-based polymer, "ELEP COAT" series available from Nitto Shinko Corporation or the like may be used.

Examples of the silicone-based polymer include polydimethylsiloxane, alkyl-modified polydimethylsiloxane, carboxyl-modified polydimethylsiloxane, amino-modified polydimethylsiloxane, epoxy-modified polydimethylsiloxane, fluorine-modified polydimethylsiloxane, and (meth)acrylate-modified polydimethylsiloxane.

The coat layer 2 can be formed by, for example, applying a composition including the material of the coat layer 2 onto the metal layer 1 and curing the composition. The method for applying the composition is not particularly limited, and examples thereof include a roll coating method, a spin coating method, a dip coating method, a spray coating method, a bar coating method, a knife coating method, a die coating method, an ink jet method, and a gravure coating method.

A solvent included in the composition can be suitably selected depending on the starting material of the coat layer 2. When the fluorine-based compound is used as the material of the coat layer 2, one of solvents such as a fluorine-based solvent, an alcohol-based solvent, an ether-based solvent, an ester-based solvent, and a hydrocarbon-based solvent can be used or two or more of them can be used in combination as the solvent. Among these solvents, the fluorine-based solvent that has no flammability and evaporates quickly is preferably used alone or in combination with another solvent.

Examples of the fluorine-based solvent include hydrofluoroether, perfluoropolyether, perfluoroalkane, hydrofluoropolyether, hydrofluorocarbon, perfluorocycloether, perfluorocycloalkane, hydrofluorocycloalkane, xylenehexafluoride, hydrofluorochlorocarbon, and perfluorocarbon.

A thickness of the coat layer 2 is not particularly limited, and it is preferably 0.1 $\mu$m or more, more preferably 0.3 $\mu$m or more, still more preferably 0.5 $\mu$m or more, and particularly preferably 1.0 $\mu$m or more. The thickness of the coat layer 2 is, for example, 80 $\mu$m or less, preferably 50 $\mu$m or less, more preferably 30 $\mu$m or less, still more preferably 20 $\mu$m or less, particularly preferably 10 $\mu$m or less, and especially preferably 5 $\mu$m or less. The thickness of the coat layer 2 can be adjusted by a solid content concentration of the composition including the material of the coat layer 2 and the number of the applications of the composition. The coat layer 2 is preferably nonporous.

<<Support Member>>

The support member 3 is not particularly limited as long as it has hydrogen permeability and supports the metal layer 1, and it is a porous body, for example. However, the support member 3 may be nonporous. The support member 3 may be a woven fabric, a nonwoven fabric, or the like. Examples of a material of the support member 3 include: polyolefin such as polyethylene or polypropylene; polyester such as polyethylene terephthalate or polyethylene naphthalate; polyarylethersulfone such as polysulfone or polyethersulfone; a fluororesin such as polytetrafluoroethylene or polyvinylidene fluoride; an epoxy resin; polyamide; and polyimide. Preferred is polysulfone or polytetrafluoroethylene, each being chemically and thermally stable.

The support member 3 is preferably a porous body having an average pore diameter of 100 $\mu$m or less. Having sufficient surface smoothness, this porous body makes it possible to easily form the metal layer 1 with a uniform thickness when the metal layer 1 is formed directly on the porous body by the spattering method or the like. Here, it is also possible to suppress the occurrence of pinholes or cracks in the metal layer 1. A thickness of the support member 3 is, for example, but not particularly limited to, 5 to 1000 $\mu$m, and preferably 10 to 300 $\mu$m.

<<Characteristics of First Separation Membrane>>

A permeation rate of the hydrogen permeating through the first separation membrane 11 is not particularly limited. In one example, a permeation rate $T_{H2}$ of the hydrogen permeating through the first separation membrane 11 is, for example, 5 GPU or more, preferably 10 GPU or more, more preferably 50 GPU or more, and still more preferably 100 GPU or more. The upper limit of the permeation rate $T_{H2}$ is, for example, but not particularly limited to, 500 GPU. Note that GPU means $10^{-6} \cdot cm^3(STP)/(sec \cdot cm^2 \cdot cmHg)$. The symbol "$cm^3(STP)$" means the volume of a gas at 1 atmospheric pressure and 0°C.

The permeation rate $T_{H2}$ can be calculated by the following method. First, a gas mixture composed of carbon dioxide and hydrogen is supplied to a space adjacent to one surface (a principal surface 11a, on the coat layer side, of the first separation membrane 11, for example) of the first separation membrane 11 while a space adjacent to another surface (a principal surface 11b, on the support member side, of the first separation membrane 11) of the first separation membrane 11 is decompressed. As a result, in the space adjacent to the other surface of the first separation membrane 11, a permeated gas that has permeated through the first separation membrane 11 can be obtained. A composition of the permeated gas, a weight of the permeated gas, etc. are measured. From the measurement results, the permeation rate $T_{H2}$ can be calculated. In the above-mentioned procedure, a concentration of the hydrogen in the gas mixture is 50 vol% under standard conditions (0°C, 101 kPa). The gas mixture supplied to the space adjacent to the one surface of the first separation membrane 11 has a temperature of 30°C and a pressure of 0.1 MPa. The space adjacent to the other surface of the first separation membrane 11 is decompressed in such a manner that a pressure in the space is lower than an atmospheric pressure in a measurement environment by 0.1 MPa.

Under the measurement conditions for the permeation rate $T_{H2}$ mentioned above, a separation factor $\alpha_{H2}$ that the first separation membrane 11 has for hydrogen with respect to carbon dioxide is, for example, 20 or more, preferably 30 or more, more preferably 40 or more, and still more preferably 50 or more. The upper limit of the separation factor $\alpha_{H2}$ is, for example, but not particularly limited to, 100. The separation factor $\alpha_{H2}$ can be calculated by the following formula. It should be noted that in the following formula, $X_A$ and $X_B$ are respectively a volume ratio of the hydrogen and a volume ratio of the carbon dioxide in the gas mixture. $Y_A$ and $Y_B$ are respectively a volume ratio of the hydrogen and a volume ratio of the carbon dioxide in the permeated gas that has permeated through the first separation membrane 11. Separation factor $\alpha_{H2} = (Y_A/Y_B)/(X_A/X_B)$

(Modification of First Separation Membrane)

The first separation membrane 11 is not limited to the above-mentioned hydrogen permeable membrane. Hereinafter, the first separation membrane 11 in the case where the gas A is carbon dioxide, that is, the first separation membrane 11 that allows carbon dioxide to preferentially permeate therethrough, will be described. In the present description, a separation membrane that allows carbon dioxide to preferentially permeate therethrough may be referred to as a "carbon dioxide permeable membrane."

As shown in FIG. 3B, the first separation membrane 11 as the carbon dioxide permeable membrane includes a separation functional layer 5, for example. The first separation membrane 11 may further include a porous support member 7 supporting the separation functional layer 5, and an intermediate layer 6 disposed between the separation functional layer 5 and the porous support member 7. The intermediate layer 6 is in direct contact with each of the separation functional layer 5 and the porous support member 7, for example.

<<Separation Functional Layer>>

The separation functional layer 5 is a layer that allows carbon dioxide to preferentially permeate therethrough. In a preferred embodiment, the separation functional layer 5 includes a resin. Examples of the resin included in the separation functional layer 5 include a polyether block amide resin, a polyamide resin, a polyether resin, a polyimide resin, a cellulose acetate resin, a silicone resin, and a fluorine resin. The separation functional layer 5 preferably includes a polyether block amide resin. In this embodiment, the separation functional layer 5 is preferably composed substantially of a resin.

In another preferred embodiment, the separation functional layer 5 includes an ionic liquid. The ionic liquid is a salt (an ionic compound) that is liquid at 25°C. The separation functional layer 5 includes, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. In the present description, the phrase "composed mainly of" means that 50 wt% or more or even 70 wt% or more is composed of the material.

The organic material for constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. First, a prepolymer having a structural unit having an N-hydroxysuccinimide ester group is prepared, for example. The structural unit having an N-hydroxysuccinimide ester group derives from N-acryloxysuccinimide, for example. Next, the prepolymer is allowed to react with an amine cross linking agent to obtain a polymer including a cross-linked structure. The amine cross linking agent is a compound, such as ethylene glycol bis(3-aminopropyl) ether, having two or more primary amino groups.

The second network structure may include a network of a plurality of particles. The network of the plurality of particles are formed by, for example, the plurality of particles being bonded to each other by hydrogen bonds. The particles included in the second network structure may be particles exemplified as the nanoparticles described later. In an example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example, a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl] imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([$C_4$mim][$TF_2$N]), and 1-(2-hydroxyethyl)-3-methylimidazolium bis(trifluoromethanesulfonyl)imide ([$C_2$OHim][$TF_2$N]).

The method for producing the double-network gel is not particularly limited, and the method disclosed in E. Kamio et al., Adv.Mater, 29, 1704118 (2017) can be used, for example.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 5 allows the carbon dioxide contained in the gas mixture to permeate therethrough. The upper limit of the content of the ionic liquid is not particularly limited and it is 95 wt%, for example.

A content of the first network structure, in the double-network gel, composed mainly of an organic material is, for example, 1 wt% or more, preferably 5 wt% or more, and more preferably 10 wt% or more. The upper limit of the content of the first network structure is 15 wt%, for example. A content of the second network structure, in the double-network gel, composed mainly of an inorganic material is, for example, 1 wt% or more from the viewpoint of improving the strength of the double-network gel. The upper limit of the content of the second network structure is 5 wt%, for example. A ratio of a total value of a weight of the first network structure and a weight of the second network structure with respect to a weight of the double-network gel is, for example, 2 wt% or more, preferably 5 wt% or more, and more preferably 10 wt% or more. This ratio is preferably 20 wt% or less. In this embodiment, the separation functional layer 5 is preferably composed substantially of the double-network gel.

A thickness of the separation functional layer 5 is, for example, 50 $\mu$m or less, preferably 25 $\mu$m or less, and more preferably 15 $\mu$m or less. In some cases, the thickness of the separation functional layer 5 may be 10 $\mu$m or less, 5.0 $\mu$m or less, or 2.0 $\mu$m or less. The thickness of the separation functional layer 5 may be 0.05 $\mu$m or more, or 0.1 $\mu$m or more.

«Intermediate Layer»

The intermediate layer 6 includes a resin, for example, and may further include nanoparticles dispersed in the resin (a matrix). The nanoparticles may be separated from each other or partially aggregate in the matrix. A material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. The inorganic material included in the nanoparticles is, for example, silica, titania, or alumina. Preferably, the nanoparticles include silica.

A thickness of the intermediate layer 6 is not particularly limited and it is, for example, less than 50 $\mu$m, preferably 40 $\mu$m or less, and more preferably 30 $\mu$m or less. The lower limit of the thickness of the intermediate layer 6 is not particularly limited and it is 1 $\mu$m, for example. The intermediate layer 6 is, for example, a layer having a thickness of less than 50 $\mu$m.

<<Porous Support Member>>

The porous support member 7 supports the separation functional layer 5 via the intermediate layer 6. Examples of the porous support member 7 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 7 may be a combination of two or more of these materials.

The porous support member 7 has an average pore diameter of 0.01 to 0.4 $\mu$m, for example. A thickness of the porous support member 7 is not particularly limited and it is, for example, 10 $\mu$m or more, preferably 20 $\mu$m or more, and more preferably 50 $\mu$m or more. The thickness of the porous support member 7 is, for example, 300 $\mu$m or less, preferably 200 $\mu$m or less, and more preferably 150 $\mu$m or less.

<<Method for Producing First Separation Membrane>>

The first separation membrane 11 can be produced by the following method, for example. First, a coating liquid containing a material of the intermediate layer 6 is prepared. Next, the coating liquid containing the material of the intermediate layer 6 is applied onto the porous support member 7 to form a coating. The method for applying the coating liquid is not particularly limited, and a wire bar, etc. can be used, for example. The thickness of the intermediate layer 6 to be formed can be adjusted by adjusting a wire diameter of the wire bar and a concentration of the material of the intermediate layer 6 in the coating liquid. The coating may be formed by immersing the porous support member 7 in the coating liquid. Next, the coating is dried to form the intermediate layer 6. The coating can be dried under heating conditions, for example. The heating temperature of the coating is 50°C or higher, for example. The heating time of the coating is 1 minute or more, for example, and it may be 5 minutes or more.

An easy-adhesion treatment can be applied onto a surface of the intermediate layer 6 as necessary. As the easy-adhesion treatment, a surface treatment such as application of an undercoat agent, a corona discharge treatment, and a plasma treatment may be applied.

Next, a coating liquid containing a material of the separation functional layer 5 is prepared. The coating liquid containing the material of the separation functional layer 5 is applied onto the intermediate layer 6 to obtain a coating.

The coating is dried to form the separation functional layer 5. The method for applying the coating liquid and the drying conditions can be the same as the method and the conditions described above for the intermediate layer 6. The application of the coating liquid containing the material of the separation functional layer 5 may be performed by spin coating. Thus, the first separation membrane 11 can be obtained.

The method for producing the first separation membrane 11 is not limited to the above method. For example, the first separation membrane 11 can also be produced by the following method. For example, the coating liquid containing the material of the separation functional layer 5 is applied onto a transfer film to obtain a coating. The coating is dried to form the separation functional layer 5. Next, the coating liquid containing the material of the intermediate layer 6 is applied onto the separation functional layer 5 and dried to form the intermediate layer 6. A laminate of the intermediate layer 6 and the separation functional layer 5 is transferred to the porous support member 7. Thus, the first separation membrane 11 can be obtained.

<<Characteristics of First Separation Membrane>>

A permeation rate of the carbon dioxide permeating through the first separation membrane 11 is not particularly limited. In an example, a permeation rate $T_{CO2}$ of the carbon dioxide permeating through the first separation membrane 11 is, for example, 5 GPU or more, preferably 10 GPU or more, more preferably 50 GPU or more, and still more preferably 100 GPU or more. The upper limit of the permeation rate $T_{CO2}$ is not particularly limited and it is 500 GPU, for example.

The permeation rate $T_{CO2}$ can be calculated by the following method. First, a gas mixture composed of carbon dioxide and hydrogen is supplied to a space adjacent to one surface (a principal surface 11a, on the separation functional layer side, of the first separation membrane 11, for example) of the first separation membrane 11 while a space adjacent to another surface (a principal surface 11b, on the porous support member side, of the first separation membrane 11) of the first separation membrane 11 is decompressed. As a result, in the space adjacent to the other surface of the first separation membrane 11, a permeated gas that has permeated through the first separation membrane 11 can be obtained. A composition of the permeated gas, a weight of the permeated gas, etc. are measured. From the measurement results, the permeation rate $T_{CO2}$ can be calculated. In the above-mentioned procedure, a concentration of the carbon dioxide in the gas mixture is 50 vol% under standard conditions (0°C, 101 kPa). The gas mixture supplied to the space adjacent to the one surface of the first separation membrane 11 has a temperature of 30°C and a pressure of 0.1 MPa. The space adjacent to the other surface of the first separation membrane 11 is decompressed in such a manner that a pressure in the space is lower than an atmospheric pressure in a measurement environment by 0.1 MPa.

Under the measurement conditions for the permeation rate $T_{CO2}$ mentioned above, a separation factor $\alpha_{CO2}$ that the first separation membrane 11 has for carbon dioxide with respect to hydrogen is, for example, 20 or more, preferably 30 or more, more preferably 40 or more, and still more preferably 50 or more. The upper limit of the separation factor $\alpha_{CO2}$ is, for example, but not particularly limited to, 100. The separation factor $\alpha_{CO2}$ can be calculated by the following formula. It should be noted that in the following formula, $X_A$ and $X_B$ are respectively a volume ratio of the carbon dioxide and a volume ratio of the hydrogen in the gas mixture. $Y_A$ and $Y_B$ are respectively a volume ratio of the carbon dioxide and a volume ratio of the hydrogen in the permeated gas that has permeated through the first separation membrane 11. Separation factor $\alpha_{CO2} = (Y_A/Y_B)/(X_A/X_B)$

[Second Separation Membrane Unit]

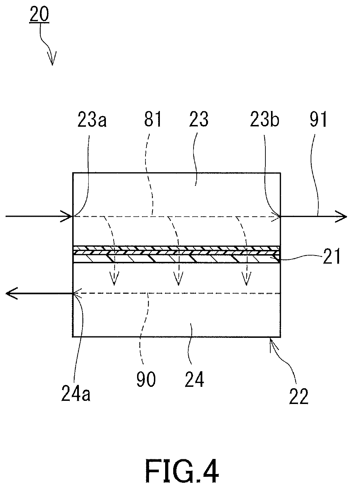

As shown in FIG. 4, the second separation membrane unit 20 includes the second separation membrane 21 and a tank 22. The tank 22 has a third chamber 23 and a fourth chamber 24. A space in the third chamber 23 corresponds to a feed-side space and a space in the fourth chamber 24 corresponds to a permeation-side space. The second separation membrane 21 is disposed in the tank 22. In the tank 22, the second separation membrane 21 separates the third chamber 23 and the fourth chamber 24 from each other. The second separation membrane 21 extends from one of a pair of wall surfaces of the tank 22 to the other.

The third chamber 23 has the inlet 23a and the outlet 23b. The fourth chamber 24 has the outlet 24a. The inlet 23a of the third chamber 23 is an opening for providing the first non-permeated gas 81 to the second separation membrane unit 20. The outlet 24a of the fourth chamber 24 is an opening for discharging, from the second separation membrane unit 20, a second permeated gas 90 obtained by allowing the first non-permeated gas 81 to permeate through the second separation membrane 21. The outlet 23b of the third chamber 23 is an opening for discharging, from the second separation membrane unit 20, the first non-permeated gas 81 (a second non-permeated gas 91) not having permeated through the second separation membrane 21. The inlet 23a, the outlet 23b, and the outlet 24a are formed, for example, in wall surfaces of the tank 22.

(Second Separation Membrane)

The second separation membrane 21 allows the gas B contained in the first non-permeated gas 81 to preferentially permeate therethrough. As the second separation membrane 21 in the case where the gas B is carbon dioxide, that is, the second separation membrane 21 that allows carbon dioxide to preferentially permeate therethrough, the carbon dioxide permeable membrane described above for the first separation membrane 11 can be mentioned. As the second separation membrane 21 in the case where the gas B is hydrogen, that is, the second separation membrane 21 that allows hydrogen to preferentially permeate therethrough, the hydrogen permeable membrane described above for the first separation membrane 11 can be mentioned.

In the gas separation system 100 of the present embodiment, when the first separation membrane 11 is the hydrogen permeable membrane, the second separation membrane 21 is the carbon dioxide permeable membrane, for example. When the first separation membrane 11 is the carbon dioxide permeable membrane, the second separation membrane 21 is the hydrogen permeable membrane, for example. In other words, one of the first separation membrane 11 and the second separation membrane 21 is the hydrogen permeable membrane, and may include a metal layer including a metal. One of the first separation membrane 11 and the second separation membrane 21 is the carbon dioxide permeable membrane, and may include a separation functional layer including a polyether block amide resin or an ionic liquid.

The first separation membrane unit 10 and the second separation membrane unit 20 included in the gas separation system 100 are suitable for a flow-type (continuous-type) membrane separation method. However, these separation membrane units may be used for a batch-type membrane separation method.

[Method for Separating Gas Mixture]

In the present embodiment, a method for separating the gas mixture 70 includes a first separation step in which the first separation membrane 11 is used, a second separation step in which the second separation membrane 21 is used, and a recovery step in which each of the second permeated gas 90 and the second non-permeated gas 91 discharged from the second separation membrane unit 20 is recovered.

The first separation step is performed as follows, for example. First, the gas mixture 70 is supplied to the first chamber 13 (the feed-side space) of the first separation membrane unit 10 via the gas mixture feed passage 30. The pressure of the gas mixture 70 is, for example, increased by the pressurizing device 40, and the gas mixture 70 is supplied to the first chamber 13. The pressure of the gas mixture 70 increased by the pressurizing device 40, that is, a pressure in the feed-side space of the first separation membrane unit 10, is, for example, 0.1 MPa or more, and preferably 0.5 MPa or more, and may be 1.0 MPa or more. The upper limit of the pressure of the gas mixture 70 is, for example, but not particularly limited to, 10.0 MPa. In the present description, the term "pressure" means an absolute pressure unless otherwise specified.

As described above, the gas mixture 70 contains the gas A and the gas B. In one example, a condition (i) the gas A is hydrogen and the gas B is carbon dioxide, or a condition (ii) the gas A is carbon dioxide and the gas B is hydrogen holds. The gas mixture 70 is typically an emission gas from a chemical plant, such as an emission gas generated by a shift reaction. It should be noted that the gas separation system 100 of the present embodiment can also be used to separate the gas mixture 70 having a composition other than the above. For example, the gas A or the gas B may be a gas selected from a nonpolar gas such as nitrogen, methane, or oxygen, an inert gas such as helium, and an acid gas other than carbon dioxide. Examples of the acid gas other than carbon dioxide include hydrogen sulfide, carbonyl sulfide, a sulfur oxide ($SO_x$), hydrogen cyanide, and a nitrogen oxide ($NO_x$).

A content of the gas A in the gas mixture 70 is, for example, 10 vol% or more, and may be 25 vol% or more, 40 vol% or more, or 50 vol% or more. The upper limit of the content of the gas A in the gas mixture 70 is, for example, but not particularly limited to, 75 vol%. A content of the gas B in the gas mixture 70 is, for example, 10 vol% or more, and may be 25 vol% or more, 40 vol% or more, or 50 vol% or more. The upper limit of the content of the gas B in the gas mixture 70 is, for example, but not particularly limited to, 75 vol%. A ratio of a volume of the gas A with respect to a total value of the volume of the gas A and a volume of the gas B in the gas mixture 70 is, for example, but not particularly limited to, 25 to 75 vol%. In the present description, the terms "content" and "volume" each mean a value under standard conditions (0°C, 101 kPa) unless otherwise specified.

The gas mixture 70 supplied to the first chamber 13 of the first separation membrane unit 10 is separated by the first separation membrane 11. Thereby, the first permeated gas 80 is supplied to the second chamber 14. The first permeated gas 80 supplied to the second chamber 14 is discharged to an outside of the first separation membrane unit 10 via the outlet 14a. The first permeated gas 80 is discharged from the discharge outlet 42 via the discharge passage 34.

As described above, the first separation membrane 11 of the first separation membrane unit 10 allows the gas A contained in the gas mixture 70 to preferentially permeate therethrough. Therefore, the first permeated gas 80 obtained in the first separation membrane unit 10 has a content of the gas A higher than that in the gas mixture 70. The content of the gas A in the first permeated gas 80 is, for example, but not particularly limited to, 50 to 99 vol%. A ratio of the content (vol%) of the gas A in the first permeated gas 80 with respect to the content (vol%) of the gas A in the gas mixture 70 is, for example, but not particularly limited to, 2 to 9.

In the gas separation system 100, the membrane area of the first separation membrane 11 is set smaller than that of the second separation membrane 21. Therefore, the first permeated gas 80 processed by the first separation membrane 11 tends to have a relatively small volume. In one example, a ratio of the volume of the first permeated gas 80 separated by the first separation membrane 11 with respect to a volume of the gas mixture 70 supplied to the first separation membrane unit 10 is, for example, but not particularly limited to, 2.5 to 50 vol%. Note that in the above-mentioned ratio, the volumes of the gas mixture 70 and the first permeated gas 80 are values under standard conditions (0°C, 101 kPa).

A concentration of the gas B in the gas mixture 70 gradually increases from the inlet 13a toward the outlet 13b in the first chamber 13. A content of the gas B in the gas mixture 70 (the first non-permeated gas 81) processed in the first chamber 13 is, for example, but not particularly limited to, 25 to 75 vol%. The first non-permeated gas 81 is discharged to the outside of the first separation membrane unit 10 via the outlet 13b. The first non-permeated gas 81 is supplied to the second separation membrane unit 20 via the non-permeated gas feed passage 32.

The second separation step is performed as follows, for example. First, the first non-permeated gas 81 is supplied to the third chamber 23 (the feed-side space) of the second separation membrane unit 20 via the non-permeated gas feed passage 32. The first non-permeated gas 81 has, for example, a pressure equivalent to that of the gas mixture 70 supplied to the first separation membrane unit 10. The pressure of the first non-permeated gas 81, that is, a pressure in the feed-side space of the second separation membrane unit 20, is, for example, 0.1 MPa or more, and preferably 0.5 MPa or more, and may be 1.0 MPa or more. The upper limit of the pressure of the first non-permeated gas 81 is, for example, but not particularly limited to, 10.0 MPa.

The first non-permeated gas 81 supplied to the third chamber 23 of the second separation membrane unit 20 is separated by the second separation membrane 21. Thereby, the second permeated gas 90 is supplied to the fourth chamber 24. The second permeated gas 90 supplied to the fourth chamber 24 is discharged to an outside of the second separation membrane unit 20 via the outlet 24a. The second permeated gas 90 is delivered to the first recovery portion 44 via the first recovery passage 36.

As described above, the second separation membrane 21 of the second separation membrane unit 20 allows the gas B contained in the first non-permeated gas 81 to preferentially permeate therethrough. Therefore, the second permeated gas 90 obtained in the second separation membrane unit 20 has a content of the gas B higher than that in the first non-permeated gas 81. The content of the gas B in the second permeated gas 90 is, for example, but not particularly limited to, 70 vol% or more, preferably 80 vol% or more, more preferably 90 vol% or more, and still more preferably 95 vol% or more. Particularly, when the gas mixture 70 has a composition of the gas A/the gas B = 50/50 in terms of volume ratio, the content of the gas B in the second permeated gas 90 is preferably 70 vol% or more. A ratio of the content (vol%) of the gas B in the second permeated gas 90 with respect to the content (vol%) of the gas B in the first non-permeated gas 81 is, for example, but not particularly limited to, 2 to 9.

A ratio of a volume of the second permeated gas 90 separated by the second separation membrane 21 with respect to a volume of the first non-permeated gas 81 supplied to the second separation membrane unit 20 is, for example, but not particularly limited to, 50 to 95 vol%. The above-mentioned ratio may be 2.5 to 50 vol%. Note that in the above-mentioned ratio, the volumes of the first non-permeated gas 81 and the second permeated gas 90 are values under standard conditions (0°C, 101 kPa).

A concentration of the gas A in the first non-permeated gas 81 gradually increases from the inlet 23a toward the outlet 23b in the third chamber 23. A content of the gas A in the first non-permeated gas 81 (the second non-permeated gas 91) processed in the third chamber 23 is, for example, but not particularly limited to, 70 vol% or more, preferably 80 vol% or more, more preferably 90 vol% or more, and still more preferably 95 vol% or more. Particularly, when the gas mixture 70 has a composition of the gas A/the gas B = 50/50 in terms of volume ratio, the content of the gas A in the second non-permeated gas 91 is preferably 70 vol% or more. The second non-permeated gas 91 is discharged to the outside of the second separation membrane unit 20 via the outlet 23b. The second non-permeated gas 91 is delivered to the second recovery portion 46 via the second recovery passage 38.

In the separation method of the present embodiment, the first separation step and the second separation step are performed successively, for example. That is, the first non-permeated gas 81 separated by the first separation step is immediately supplied to the second separation step without being collected into a tank, etc. Performing the first separation step and the second separation step successively makes it possible to easily increase an amount of the gas mixture 70 to be processed per unit time.

In the recovery step, the second permeated gas 90 in which the gas B has been concentrated is recovered by the first recovery portion 44. The second non-permeated gas 91 in which the gas A has been concentrated is recovered by the second recovery portion 46. A recovery rate of the gas B by the second permeated gas 90 is not particularly limited and it is, for example, 70% or more, preferably 80% or more, more preferably 90% or more, and still more preferably 95% or more. A recovery rate of the gas A by the second non-permeated gas 91 is not particularly limited and it is, for example, 60% or more, preferably 70% or more, more preferably 80% or more, and still more preferably 90% or more. In the present description, the term "recovery rate" means a rate of, with respect of a weight of a specific gas contained in the gas mixture, a weight of the gas recovered. Note that the term "weight" means a value under standard conditions (0°C, 101 kPa).

In conventional gas separation systems, it is common that a membrane area of a first separation membrane is set equivalent to that of a second separation membrane, and a first permeated gas having permeated through the first separation membrane and a second permeated gas having permeated through the second separation membrane are recovered. According to the studies by the present inventors, this method requires to increase significantly the membrane areas of the first separation membrane and the second separation membrane in order to improve the recovery rates of the gas A and the gas B. However, the increase in the membrane area of each of these separation membranes not only raises the production cost but also tends to lower the content of the gas A in the first permeated gas and the content of the gas B in the second permeated gas.

In contrast, in the gas separation system 100 of the present embodiment, the membrane area of the first separation membrane 11 is set smaller than that of the second separation membrane 21, and furthermore, the second permeated gas 90 and the second non-permeated gas 91 are recovered. The gas separation system 100 tends to make it possible to recover each of the gas A and the gas B at a high purity and a high recovery rate without increasing significantly the total value of the membrane area of the first separation membrane 11 and the membrane area of the second separation membrane 21. Accordingly, the gas separation system 100 of the present embodiment is suitable for separating a gas mixture efficiently.

As described above, in the gas separation system 100 of the present embodiment, the membrane area M1 of the first separation membrane 11 and the membrane area M2 of the second separation membrane 21 satisfy a relational expression (1) below. Note that in the gas separation system 100, a relational expression (2) or a relational expression (3) below may be satisfied instead of the relational expression (1) or together with the relational expression (1). In the relational expression (2), T1 means a permeation rate of the gas A permeating through the first separation membrane 11, and T2 means a permeation rate of the gas B permeating through the second separation membrane 21. In the relational expression (3), $\alpha 1$ means a separation factor that the first separation membrane 11 has for the gas A with respect to the gas B, and $\alpha 2$ means a separation factor that the second separation membrane 21 has for the gas B with respect to the gas A. The permeation rates T1 and T2 as well as the separation factors $\alpha 1$ and $\alpha 2$ can be measured by the same methods as those described above for the hydrogen permeable membrane, except that the gas mixture composed of the gas A and the gas B is used.

$$M1 < M2 \qquad (1)$$

$$M1 \times T1 < M2 \times T2 \qquad (2)$$

$$M1 \times \alpha 1 < M2 \times \alpha 2 \qquad (3)$$

[Modification of First Separation Membrane Unit]

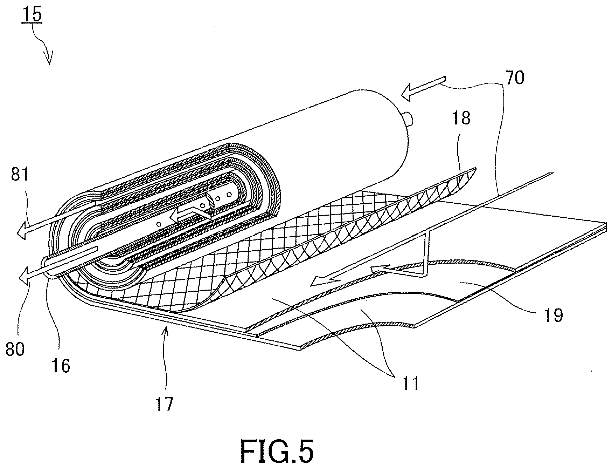

In the gas separation system 100, the first separation membrane unit 10 may be a spiral membrane element as shown in FIG. 5. A first separation membrane unit 15 of FIG. 5 includes a central tube 16 and a laminate 17. The laminate 17 includes the first separation membrane 11.

The central tube 16 has a cylindrical shape. The central tube 16 has a surface with a plurality of holes or slits to allow the first permeated gas 80 to flow into the central tube 16. Examples of a material of the central tube 16 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 16 has an inner diameter in a range of, for example, 20 to 100 mm.

The laminate 17 further includes a feed-side flow passage material 18 and a permeation-side flow passage material 19 in addition to the first separation membrane 11. The laminate 17 is wound around the central tube 16. The first separation membrane unit 15 may further include an exterior material (not shown).

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

Membrane separation using the first separation membrane unit 15 is performed by the following method, for example. First, the gas mixture 70 is supplied to one end of the wound laminate 17. The first permeated gas 80 having permeated through the first separation membrane 11 of the laminate 17 thereby moves into the central tube 16. The first permeated gas 80 is discharged outside via the central tube 16. The gas mixture 70 (the first non-permeated gas 81) processed in the first separation membrane unit 15 is discharged outside from another end of the wound laminate 17.

In the gas separation system 100, the second separation membrane unit 20 may be a spiral membrane element having the same configuration as that of the first separation membrane unit 15.

EXAMPLES

Hereinafter, the present invention will be described in more detail by way of examples, but the present invention is not limited to these examples.

(Calculation Example 1)

The operation of the gas separation system shown in FIG. 1 was simulated using Symmetry, a process modeling software available from Schlumberger Ltd. Specifically, it was assumed to use the hydrogen permeable membrane as the first separation membrane, to use the carbon dioxide permeable membrane as the second separation membrane, and to recover the second permeated gas and the second non-permeated gas in the gas separation system shown in FIG. 1. The gas separation system according to this assumption may be referred to as model 1-1. The permeation rate $T_{H2}$ that the hydrogen permeable membrane has for hydrogen was set to100 GPU and the separation factor $\alpha_{H2}$ that the hydrogen permeable membrane has for hydrogen with respect to carbon dioxide was set to 50. Similarly, the permeation rate $T_{CO2}$ that the carbon dioxide permeable membrane has for carbon dioxide was set to 100 GPU and the separation factor $\alpha_{CO2}$ that the carbon dioxide permeable membrane has for carbon dioxide with respect to hydrogen was set to 50. In addition, the conditions for supplying the gas mixture and conditions for recovering carbon dioxide were determined as follows. Note that it was assumed to increase the pressure of the gas mixture from an atmospheric pressure (101.33 kPa) in an external environment to 1 MPa by the pressurizing device provided to the gas mixture feed passage.

[Conditions for Supplying Gas Mixture]

Flow rate: 1016.47 Nm$^3$/hr
Composition (volume ratio): $CO_2/H_2$ = 50/50
Weight of $CO_2$: 1000 kg/hr
Weight of $H_2$: 45.81 kg/hr
Pressure: 1 MPa
Temperature: 25°C
[Conditions for Recovering Carbon Dioxide]
Purity (the content of $CO_2$ in the second permeated gas): 95 vol%
Recovery rate (the ratio of the weight of $CO_2$ in the second permeated gas with respect to the weight of $CO_2$ in the gas mixture): 80%

Through the simulation of Calculation Example 1, the membrane areas of the separation membranes required to separate the gas mixture by using the gas separation system, the purity of hydrogen (the content of $H_2$ in the second non-permeated gas), and the recovery rate of hydrogen (the ratio of the weight of $H_2$ in the second non-permeated gas with respect to the weight of $H_2$ in the gas mixture) were calculated. Table 1 shows the results.

(Calculation Example 2)

Calculation Example 2 was simulated in the same manner as in Calculation Example 1, except that it was assumed to recover the first permeated gas and the second permeated gas. The gas separation system according to the assumption of Calculation Example 2 may be referred to as model 1-2. Through the simulation of Calculation Example 2, the membrane areas of the separation membranes required to separate the gas mixture by using the gas separation system, the purity of hydrogen (the content of $H_2$ in the first permeated gas), and the recovery rate of hydrogen (the ratio of the weight of $H_2$ in the first permeated gas with respect to the weight of $H_2$ in the gas mixture) were calculated. Table 1 shows the results.

(Calculation Example 3)

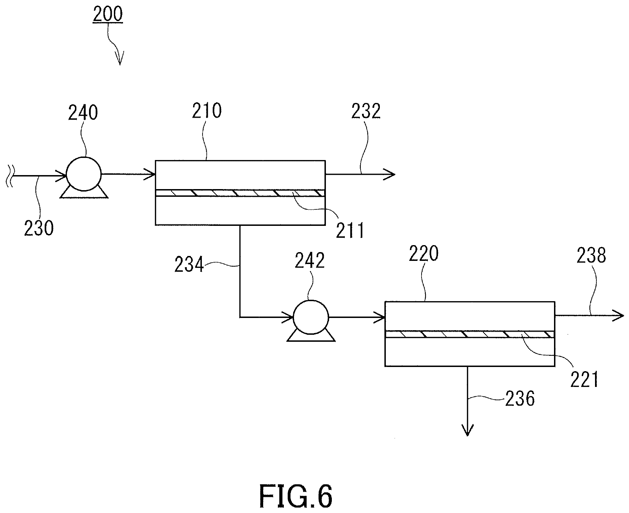

The operation of a gas separation system 200 shown in FIG. 6 was simulated using Symmetry, a process modeling software available from Schlumberger Ltd. The gas separation system 200 includes a first separation membrane unit 210 that accommodates a first separation membrane 211, and a second separation membrane unit 220 that accommodates a second separation membrane 221. The first separation membrane 211 and the second separation membrane 221 correspond respectively to the first separation membrane 11 and the second separation membrane 21 of the gas separation system 100 in FIG. 1. Note that the second separation membrane 221 is configured to separate the first permeated gas having permeated through the first separation membrane 211 into the second permeated gas and the second non-permeated gas.

The gas separation system 200 includes a gas mixture feed passage 230, a first recovery passage 232, a permeated gas feed passage 234, a discharge passage 236, and a second recovery passage 238. The gas mixture feed passage 230 is a passage for supplying the gas mixture to the first separation membrane unit 210. The gas mixture feed passage 230 is provided with a pressurizing device 240 that increases the pressure of the gas mixture.

The first recovery passage 232 is a passage connected to a non-permeated gas outlet of the first separation membrane unit 210 and configured to recover the first non-permeated gas from the first separation membrane unit 210.

The permeated gas feed passage 234 is a passage connected to a permeated gas outlet of the first separation membrane unit 210 and a permeated gas inlet of the second separation membrane unit 220 and configured to supply the first permeated gas from the first separation membrane unit 210 to the second separation membrane unit 220. The permeated gas feed passage 234 is provided with a pressurizing device 242 that increases a pressure of the first permeated gas.

The discharge passage 236 is a passage connected to a permeated gas outlet of the second separation membrane unit 220 and configured to discharge the second permeated gas from the second separation membrane unit 220. The second recovery passage 238 is a passage connected to a non-permeated gas outlet of the second separation membrane unit 220 and configured to recover the second non-permeated gas from the second separation membrane unit 220.

In Calculation Example 3, it was assumed to use the carbon dioxide permeable membrane as the first separation membrane 211, to use the hydrogen permeable membrane as the second separation membrane 221, and to recover the first non-permeated gas and the second non-permeated gas. The gas separation system according to this assumption may be referred to as model 2. Calculation Example 3 was simulated in the same manner as in Calculation Example 1, except that the model 2 was used. Note that in the gas separation system 200, the pressure of the first permeated gas having permeated through the first separation membrane 211 is usually equal to an atmospheric pressure in an external environment. Thus, in Calculation Example 3, it was assumed to increase the pressure of the first permeated gas to 1 MPa by the pressurizing device provided to the permeated gas feed passage 234. That is, in Calculation Example 3, it was assumed to increase the pressure of the gas mixture by the pressurizing device 240 and to increase the pressure of the first permeated gas by the pressurizing device 242.

Through the simulation of Calculation Example 3, the membrane areas of the separation membranes required to separate the gas mixture by using the gas separation system, the purity of hydrogen (the content of $H_2$ in the first non-permeated gas), and the recovery rate of hydrogen (the ratio of the weight of $H_2$ in the first non-permeated gas with respect to the weight of $H_2$ in the gas mixture) were calculated. Table 1 shows the results.

(Calculation Example 4)

Calculation Example 4 was simulated in the same manner as in Calculation Example 1, except that it was assumed to use the carbon dioxide permeable membrane as the first separation membrane and to use the hydrogen permeable membrane as the second separation membrane. The gas separation system according to the assumption of Calculation Example 4 may be referred to as model 3-1. Through the simulation of Calculation Example 4, the membrane areas of the separation membranes required to separate the gas mixture by using the gas separation system, the purity of hydrogen (the content of $H_2$ in the second permeated gas), and the recovery rate of hydrogen (the ratio of the weight of $H_2$ in the second permeated gas with respect to the weight of $H_2$ in the gas mixture) were calculated. Table 1 shows the results.

(Calculation Example 5)

Calculation Example 5 was simulated in the same manner as in Calculation Example 4, except that it was assumed to recover the first permeated gas and the second permeated gas. The gas separation system according to the assumption of Calculation Example 5 may be referred to as model 3-2. In the simulation of Calculation Example 5, it was impossible to achieve the above-mentioned conditions for recovering carbon dioxide. Therefore, the membrane area of the first separation membrane was set to 840 m$^2$ and the membrane area of the second separation membrane was set to 463 m$^2$. In these settings, the purity of carbon dioxide (the content of $CO_2$ in the first permeated gas), the recovery rate of carbon dioxide (the ratio of the weight of $CO_2$ in the first permeated gas with respect to the weight of $CO_2$ in the gas mixture), the purity of hydrogen (the content of $H_2$ in the second permeated gas), and the recovery rate of hydrogen (the ratio of the weight of $H_2$ in the second permeated gas with respect to the weight of $H_2$ in the gas mixture) were calculated. Table 1 shows the results.

(Calculation Example 6)

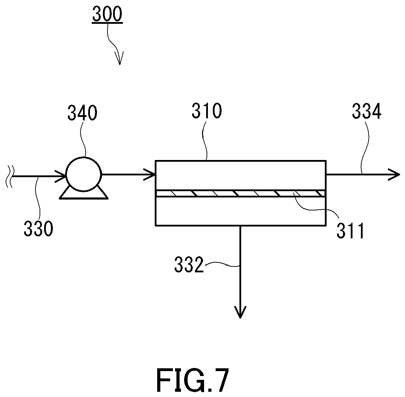

The operation of a gas separation system 300 shown in FIG. 7 was simulated using Symmetry, a process modeling software available from Schlumberger Ltd. The gas separation system 300 includes a separation membrane unit 310 that accommodates a separation membrane 311. The separation membrane 311 corresponds to the first separation membrane 11 of the gas separation system 100 in FIG. 1. The gas separation system 300 has the same configuration as that of the gas separation system 100 in FIG. 1, except that the gas separation system 300 does not include the second separation membrane unit.

The gas separation system 300 includes a gas mixture feed passage 330, a first recovery passage 332, and a second recovery passage 334. The gas mixture feed passage 330 is a passage for supplying the gas mixture to the separation membrane unit 310. The gas mixture feed passage 330 is provided with a pressurizing device 340 that increases the pressure of the gas mixture.

The first recovery passage 332 is a passage connected to a permeated gas outlet of the separation membrane unit 310 and configured to recover the permeated gas from the separation membrane unit 310. The second recovery passage 334 is a passage connected to a non-permeated gas outlet of the separation membrane unit 310 and configured to recover the non-permeated gas from the separation membrane unit 310.

In Calculation Example 6, it was assumed to use the hydrogen permeable membrane as the separation membrane and to recover the permeated gas and the non-permeated gas. The gas separation system according to this assumption may be referred to as model 4. Calculation Example 6 was simulated in the same manner as in Calculation Example 1, except that the model 4 was used. Through the simulation of Calculation Example 6, the membrane areas of the separation membranes required to separate the gas mixture by using the gas separation system, the purity of hydrogen (the content of $H_2$ in the permeated gas), and the recovery rate of hydrogen (the ratio of the weight of $H_2$ in the permeated gas with respect to the weight of $H_2$ in the gas mixture) were calculated. Table 1 shows the results.

(Calculation Example 7)

Using the gas separation system 200 shown in FIG. 6, Calculation Example 7 was simulated in the same manner as in Calculation Example 3, except that it was assumed to use the carbon dioxide permeable membrane as the first separation membrane 211, to use the carbon dioxide permeable membrane as the second separation membrane 221, and to recover the first non-permeated gas and the second permeated gas. The gas separation system according to the assumption of Calculation Example 7 may be referred to as model 5. Through the simulation of Calculation Example 7, the membrane areas of the separation membranes required to separate the gas mixture by using the gas separation system, the purity of hydrogen (the content of $H_2$ in the first non-permeated gas), and the recovery rate of hydrogen (the ratio of the weight of $H_2$ in the first non-permeated gas with respect to the weight of $H_2$ in the gas mixture) were calculated. Table 1 shows the results.

[Table 1]

| | Model | First separation membrane / Second separation membrane | Number of times of increasing pressure | Membrane area | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|
| | | | | Total value ($m^2$) / First separation membrane ($m^2$) / Second separation membrane ($m^2$) | | | | | | |
| Calculation Example 1 | 1-1 | $H_2$ permeable membrane | 1 | 648 | Second permeated gas | 95 | 80 | Second non-permeated gas | 81.6 | 87.9 |
| | | | | 38 | | | | | | |
| | | $CO_2$ permeable membrane | | 610 | | | | | | |
| Calculation Example 2 | 1-2 | $H_2$ permeable membrane | 1 | 648 | Second permeated gas | 95 | 80 | First permeated gas | 97.5 | 7.9 |
| | | | | 38 | | | | | | |
| | | $CO_2$ permeable membrane | | 610 | | | | | | |
| Calculation Example 3 | 2 | $CO_2$ permeable membrane | 2 | 769 | Second non-permeated gas | 95 | 80 | First non-permeated gas | 45.4 | 93.6 |
| | | | | 675 | | | | | | |
| | | $H_2$ permeable membrane | | 94 | | | | | | |
| Calculation Example 4 | 3-1 | $CO_2$ permeable membrane | 1 | 1490 | Second non-permeated gas | 95 | 80 | Second permeated gas | 88.9 | 95.6 |
| | | | | 39 | | | | | | |
| | | $H_2$ permeable membrane | | 1451 | | | | | | |

| | Model | First separation membrane / Second separation membrane | Number of times of increasing pressure | Membrane area / Total value (m²) / First separation membrane (m²) / Second separation membrane (m²) | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|
| Calculation Example 5 | 3-2 | $CO_2$ permeable membrane | 1 | 1303 | First permeated gas | 91 | 67 | Second permeated gas | 99.4 | 23.1 |
| | | | | 840 | | | | | | |
| | | $H_2$ permeable membrane | | 463 | | | | | | |
| Calculation Example 6 | 4 | $H_2$ permeable membrane | 1 | 12106 | First non-permeated gas | 95 | 80 | First permeated gas | 82.7 | 95.8 |
| | | | | 12106 | | | | | | |
| | | - | | - | | | | | | |
| Calculation Example 7 | 5 | $CO_2$ permeable membrane | 2 | 10132 | Second permeated gas | 95 | 80 | First non-permeated gas | 96.7 | 32.4 |
| | | | | 7155 | | | | | | |
| | | $CO_2$ permeable membrane | | 2977 | | | | | | |

EP 4 393 571 A1

As understood from Table 1, in Calculation Examples 1 and 4 using the gas separation system of the present embodiment, it was possible to recover each of the carbon dioxide and the hydrogen at a high purity and a high recovery rate without increasing significantly the total value of the membrane area of the first separation membrane and the membrane area of the second separation membrane. As described above, the gas separation system of the present embodiment makes it possible to separate the gas mixture efficiently.

Particularly, the results of Calculation Examples 1, 4, and 6 reveal that, by combining two separation membranes, the gas separation system of the present embodiment makes it possible to significantly reduce the required membrane areas compared to the gas separation system including one separation membrane.

(Calculation Examples 8 to 12)

In Calculation Examples 8 to 12, the operation of the model 1-1 was simulated in the same manner as in Calculation Example 1. In Calculation Examples 8 to 12, the ratio of the membrane area of the first separation membrane with respect to the membrane area of the second separation membrane was changed from that in the conditions of Calculation Example 1, and the influences thereof were observed. Table 2 shows the results.

[Table 2]

| | Model | First separation membrane | Membrane area | | Membrane area ratio (*1) | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|---|
| | | | Total value (m²) | | | | | | | | |
| | | Second separation membrane | First separation membrane (m²) | | | | | | | | |
| | | | Second separation membrane (m²) | | | | | | | | |
| Calculation Example 8 | 1-1 | $H_2$ permeable membrane | 648 | | 2.5/97.5 | Second permeated gas | 94.7 | 79.8 | Second non-permeated gas | 82.1 | 92.2 |
| | | | 16.2 | | | | | | | | |
| | | $CO_2$ permeable membrane | 631.8 | | | | | | | | |
| Calculation Example 1 | | $H_2$ permeable membrane | 648 | | 5.9/94.1 | Second permeated gas | 95 | 80 | Second non-permeated gas | 81.6 | 87.9 |
| | | | 38 | | | | | | | | |
| | | $CO_2$ permeable membrane | 610 | | | | | | | | |
| Calculation Example 9 | | $H_2$ permeable membrane | 648 | | 10/90 | Second permeated gas | 95.3 | 80.2 | Second non-permeated gas | 81.0 | 82.8 |
| | | | 64.8 | | | | | | | | |
| | | $CO_2$ permeable membrane | 583.2 | | | | | | | | |
| Calculation Example 10 | | $H_2$ permeable membrane | 648 | | 25/75 | Second permeated gas | 96.4 | 79.4 | Second non-permeated gas | 77.7 | 66.2 |
| | | | 162 | | | | | | | | |
| | | $CO_2$ permeable membrane | 486 | | | | | | | | |
| Calculation Example 11 | | $H_2$ permeable membrane | 648 | | 50/50 | Second permeated gas | 97.9 | 74.3 | Second non-permeated gas | 65.3 | 44.6 |
| | | | 324 | | | | | | | | |
| | | $CO_2$ permeable membrane | 324 | | | | | | | | |

(continued)

| | Model | First separation membrane | Membrane area | Membrane area ratio (*1) | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|
| | | | Total value (m$^2$) | | | | | | | |
| | | Second separation membrane | First separation membrane (m$^2$) | | | | | | | |
| | | | Second separation membrane (m$^2$) | | | | | | | |
| Calculation Example 12 | | $H_2$ permeable membrane | 648 | 75/25 | Second permeated gas | 99.9 | 50.9 | Second non-permeated gas | 39.4 | 30.0 |
| | | | 486 | | | | | | | |
| | | $CO_2$ permeable membrane | 162 | | | | | | | |
| (*1) The ratio of the membrane area of the first separation membrane with respect to the membrane area of the second separation membrane. | | | | | | | | | | |

As understood from Table 2, in Calculation Examples 1, and 8 to10, in which the membrane area of the first separation membrane was smaller than the membrane area of the second separation membrane, it was possible to recover each of the carbon dioxide and the hydrogen at a high purity and a high recovery rate. In Calculation Examples 1, 8, and 9, in which the ratio of the membrane area of the first separation membrane with respect to the membrane area of the second separation membrane was 10/90 or less, carbon dioxide and hydrogen were particularly high in terms of purity and recovery rate.

(Calculation Examples 13 to 17)

In Calculation Examples 13 to 17, the operation of model 1-2 was simulated in the same manner as in Calculation Example 2. In Calculation Examples 13 to 17, the ratio of the membrane area of the first separation membrane with respect to the membrane area of the second separation membrane was changed from that in the conditions of Calculation Example 2, and the influences thereof were observed. Table 3 shows the results.

[Table 3]

| | Model | First separation membrane | Membrane area | | Membrane area ratio (*1) | CO$_2$ recovery | Purity of CO$_2$ recovery (vol%) | CO$_2$ recovery rate (%) | H$_2$ recovery | Purity of H$_2$ recovery (vol%) | H$_2$ recovery rate (%) |
|---|---|---|---|---|---|---|---|---|---|---|---|
| | | | Total value (m$^2$) | | | | | | | | |
| | | Second separation membrane | First separation membrane (m$^2$) | | | | | | | | |
| | | | Second separation membrane (m$^2$) | | | | | | | | |
| Calculation Example 13 | | H$_2$ permeable membrane | 648 | | 2.5/97.5 | Second permeated gas | 94.7 | 79.8 | First permeated gas | 97.5 | 3.4 |
| | | | 162 | | | | | | | | |
| | | CO$_2$ permeable membrane | 631.8 | | | | | | | | |
| Calculation Example 2 | | H$_2$ permeable membrane | 648 | | 5.9/94.1 | Second permeated gas | 95 | 80 | First permeated gas | 97.5 | 7.9 |
| | | | 38 | | | | | | | | |
| | | CO$_2$ permeable membrane | 610 | | | | | | | | |
| Calculation Example 14 | 1-2 | H$_2$ permeable membrane | 648 | | 10/90 | Second permeated gas | 95.3 | 80.2 | First permeated gas | 97.4 | 13.2 |
| | | | 64.8 | | | | | | | | |
| | | CO$_2$ permeable membrane | 583.2 | | | | | | | | |
| Calculation Example 15 | | H$_2$ permeable membrane | 648 | | 25/75 | Second permeated gas | 96.4 | 79.4 | First permeated gas | 97.1 | 30.7 |
| | | | 162 | | | | | | | | |
| | | CO$_2$ permeable membrane | 486 | | | | | | | | |

(continued)

| | Model | First separation membrane | Membrane area | | Membrane area ratio (*1) | CO$_2$ recovery | Purity of CO$_2$ recovery (vol%) | CO$_2$ recovery rate (%) | H$_2$ recovery | Purity of H$_2$ recovery (vol%) | H$_2$ recovery rate (%) |
|---|---|---|---|---|---|---|---|---|---|---|---|
| | | | Total value (m$^2$) | | | | | | | | |
| | | Second separation membrane | First separation membrane (m$^2$) | | | | | | | | |
| | | | Second separation membrane (m$^2$) | | | | | | | | |
| Calculation Example 16 | | H$_2$ permeable membrane | 648 | | 50/50 | Second permeated gas | 97.9 | 74.3 | First permeated gas | 96.4 | 53.8 |
| | | | 324 | | | | | | | | |
| | | CO$_2$ permeable membrane | 324 | | | | | | | | |
| Calculation Example 17 | | H$_2$ permeable membrane | 648 | | 75/25 | Second permeated gas | 99.9 | 50.9 | First permeated gas | 95.6 | 69.9 |
| | | | 486 | | | | | | | | |
| | | CO$_2$ permeable membrane | 162 | | | | | | | | |
| (*1) The ratio of the membrane area of the first separation membrane with respect to the membrane area of the second separation membrane. | | | | | | | | | | | |

As understood from Table 3, in model 1-2, in which the first permeated gas and the second permeated gas were recovered, it was difficult to recover each of the carbon dioxide and the hydrogen at a high recovery rate even when the membrane areas of the first separation membrane and the second separation membrane were adjusted.

(Calculation Examples 18 to 21)

In Calculation Examples 18 to 21, the operation of model 3-1 was simulated in the same manner as in Calculation Example 4. In Calculation Examples 18 to 21, the ratio of the membrane area of the first separation membrane with respect to the membrane area of the second separation membrane was changed from that in the conditions of Calculation Example 4, and the influences thereof were observed. Table 4 shows the results.

[Table 4]

| | Model | First separation membrane | Membrane area Total value (m$^2$) | Membrane area ratio (*1) | CO$_2$ recovery | Purity of CO$_2$ recovery (vol%) | CO$_2$ recovery rate (%) | H$_2$ recovery | Purity of H$_2$ recovery (vol%) | H$_2$ recovery rate (%) |
|---|---|---|---|---|---|---|---|---|---|---|
| | | Second separation membrane | First separation membrane (m$^2$) / Second separation membrane (m$^2$) | | | | | | | |
| Calculation Example 18 | | CO$_2$ permeable membrane | 1490 | 2.5/97.5 | Second non-permeated gas | 95 | 80.3 | Second permeated gas | 88.9 | 95.5 |
| | | | 37.3 | | | | | | | |
| | | H$_2$ permeable membrane | 1452.7 | | | | | | | |
| Calculation Example 4 | | CO$_2$ permeable membrane | 1490 | 2.6/97.4 | Second non-permeated gas | 95 | 80 | Second permeated gas | 88.9 | 95.6 |
| | | | 39 | | | | | | | |
| | | H$_2$ permeable membrane | 1451 | | | | | | | |
| Calculation Example 19 | 3-1 | CO$_2$ permeable membrane | 1490 | 10/90 | Second non-permeated gas | 95.9 | 60.6 | Second permeated gas | 89.9 | 96.6 |
| | | | 149 | | | | | | | |
| | | H$_2$ permeable membrane | 1341 | | | | | | | |
| Calculation Example 20 | | CO$_2$ permeable membrane | 1490 | 50/50 | Second non-permeated gas | 97.8 | 12.5 | Second permeated gas | 96.1 | 97.3 |
| | | | 745 | | | | | | | |
| | | H$_2$ permeable membrane | 745 | | | | | | | |
| Calculation Example 21 | | CO$_2$ permeable membrane | 1490 | 75/25 | Second non-permeated gas | 96.6 | 6.6 | Second permeated gas | 98.1 | 90.9 |
| | | | 1117.5 | | | | | | | |
| | | H$_2$ permeable membrane | 372.5 | | | | | | | |

(*1) The ratio of the membrane area of the first separation membrane with respect to the membrane area of the second separation membrane.

As understood from Table 4, in Calculation Examples 4, 18, and 19, in which the membrane area of the first separation membrane was smaller than the membrane area of the second separation membrane, it was possible to recover each of the carbon dioxide and the hydrogen at a high purity and a high recovery rate.

(Calculation Examples 22 to 28)

Calculation Examples 22 to 28 were simulated in the same manner as in Calculation Examples 1 to 7, respectively, except that: the permeation rate $T_{H2}$ that the hydrogen permeable membrane has for hydrogen was set to 50 GPU and the separation factor $\alpha_{H2}$ that the hydrogen permeable membrane has for hydrogen with respect to carbon dioxide was set to 40; and the permeation rate $T_{CO2}$ that the carbon dioxide permeable membrane has for carbon dioxide was set to 50 GPU and the separation factor $\alpha_{CO2}$ that the carbon dioxide permeable membrane has for carbon dioxide with respect to hydrogen was set to 40. Table 5 shows the results. Note that in the simulation of Calculation Example 26, it was impossible to achieve the conditions for recovering carbon dioxide mentioned above in Calculation Example 1 and appropriate calculation results were unable to be obtained.

[Table 5]

| | Model | | | Number of times of increasing pressure | Membrane area Total value (m²) | First separation membrane (m²) | Second separation membrane (m²) | CO₂ recovery | Purity of CO₂ recovery (vol%) | CO₂ recovery rate (%) | H₂ recovery | Purity of H₂ recovery (vol%) | H₂ recovery rate (%) |
|---|---|---|---|---|---|---|---|---|---|---|---|---|---|
| | | | First separation membrane | Second separation membrane | | | | | | | | | |
| Calculation Example 22 | 1-1 | H₂ permeable membrane | CO₂ permeable membrane | 1 | 3128 | 712 | 2416 | Second permeated gas | 95 | 80 | Second non-permeated gas | 79.1 | 72.5 |
| Calculation Example 23 | 1-2 | H₂ permeable membrane | CO₂ permeable membrane | 1 | 3128 | 712 | 2416 | Second permeated gas | 95 | 80 | First permeated gas | 96.6 | 23.3 |
| Calculation Example 24 | 2 | CO₂ permeable membrane | H₂ permeable membrane | 2 | 5759 | 4270 | 1489 | Second non-permeated gas | 95 | 80 | First non-permeated gas | 36.7 | 75.2 |
| Calculation Example 25 | 3-1 | CO₂ permeable membrane | H₂ permeable membrane | 1 | 8480 | 169 | 8311 | Second non-permeated gas | 95 | 80 | Second permeated gas | 87.1 | 95.6 |

| | Model | First separation membrane / Second separation membrane | Number of times of increasing pressure | Membrane area Total value (m²) / First separation membrane (m²) / Second separation membrane (m²) | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|
| Calculation Example 26 | 3-2 | $CO_2$ permeable membrane / $H_2$ permeable membrane | 1 | Not calculable | First permeated gas | Not calculable | Not calculable | Second permeated gas | Not calculable | Not calculable |
| Calculation Example 27 | 4 | $H_2$ permeable membrane / - | 1 | 13530 / 13530 / - | First non-permeated gas | 95 | 80 | First permeated gas | 82.7 | 95.8 |
| Calculation Example 28 | 5 | $CO_2$ permeable membrane / $CO_2$ permeable membrane | 2 | 14604 / 10220 / 4384 | Second permeated gas | 95 | 80 | First non-permeated gas | 95.6 | 21.7 |

EP 4 393 571 A1

31

As understood from Table 5, even when the separation performances of the hydrogen permeable membrane and the carbon dioxide permeable membrane were changed, in Calculation Examples 22 and 25 using the gas separation system of the present embodiment, it was possible to recover each of the carbon dioxide and the hydrogen at a high purity and a high recovery rate without increasing significantly the total value of the membrane area of the first separation membrane and the membrane area of the second separation membrane.

(Calculation Examples 29 to 31)

In Calculation Examples 29 to 31, the ratio of the membrane area of the first separation membrane with respect to the membrane area of the second separation membrane was changed from that in the conditions of Calculation Examples 22, 23, and 25, respectively, and the influences thereof were observed. Table 6 shows the results.

[Table 6]

| | Model | First separation membrane / Second separation membrane | Number of times of increasing pressure | Membrane area | | $CO_2$ recovery | Purity of $CO_2$ recovery (vol%) | $CO_2$ recovery rate (%) | $H_2$ recovery | Purity of $H_2$ recovery (vol%) | $H_2$ recovery rate (%) |
|---|---|---|---|---|---|---|---|---|---|---|---|
| | | | | Total value (m²) | | | | | | | |
| | | | | First separation membrane (m²) | | | | | | | |
| | | | | Second separation membrane (m²) | | | | | | | |
| Calculation Example 22 | 1-1 | $H_2$ permeable membrane | 1 | 3128 | | Second permeated gas | 95 | 80 | Second non-permeated gas | 79.1 | 72.5 |
| | | | | 712 | | | | | | | |
| | | $CO_2$ permeable membrane | | 2416 | | | | | | | |
| Calculation Example 23 | 1-2 | $H_2$ permeable membrane | 1 | 3128 | | Second permeated gas | 95 | 80 | First permeated gas | 96.6 | 23.3 |
| | | | | 712 | | | | | | | |
| | | $CO_2$ permeable membrane | | 2416 | | | | | | | |
| Calculation Example 25 | 3-1 | $CO_2$ permeable membrane | 1 | 8480 | | Second non-permeated gas | 95 | 80 | Second permeated gas | 87.1 | 95.6 |
| | | | | 169 | | | | | | | |
| | | $H_2$ permeable membrane | | 8311 | | | | | | | |
| Calculation Example 29 | 1-1 | $H_2$ permeable membrane | 1 | 3840 | | Second permeated gas | 97.4 | 73.5 | Second non-permeated gas | 35.1 | 44.5 |
| | | | | 1920 | | | | | | | |
| | | $CO_2$ permeable membrane | | 1920 | | | | | | | |

| | Model | First separation membrane / Second separation membrane | Number of times of increasing pressure | Membrane area | CO$_2$ recovery | Purity of CO$_2$ recovery (vol%) | CO$_2$ recovery rate (%) | H$_2$ recovery | Purity of H$_2$ recovery (vol%) | H$_2$ recovery rate (%) |
|---|---|---|---|---|---|---|---|---|---|---|
| | | | | Total value (m$^2$) / First separation membrane (m$^2$) / Second separation membrane (m$^2$) | | | | | | |
| Calculation Example 30 | 1-2 | H$_2$ permeable membrane / CO$_2$ permeable membrane | 1 | 3840 / 1920 / 1920 | Second permeated gas | 97.4 | 73.5 | First permeated gas | 95.6 | 53.5 |
| Calculation Example 31 | 3-1 | CO$_2$ permeable membrane / H$_2$ permeable membrane | 1 | 8480 / 4240 / 4240 | Second non-permeated gas | 98.9 | 11.6 | Second permeated gas | 94.3 | 93.5 |

EP 4 393 571 A1

34

As understood from Table 6, in Calculation Examples 22 and 25 using the gas separation system of the present embodiment, in which the membrane area of the first separation membrane was smaller than the membrane area of the second separation membrane, it was possible to recover each of the carbon dioxide and the hydrogen at a high purity and a high recovery rate.

INDUSTRIAL APPLICABILITY

The gas separation system of the present embodiment is suitable for separating a gas mixture, such as a gas mixture containing carbon dioxide and hydrogen. In particular, the gas separation system of the present embodiment is suitable for processing an off-gas of a chemical plant.

**Claims**

1. A gas separation system comprising:

   a first separation membrane that separates a gas mixture into a first permeated gas and a first non-permeated gas; and
   a second separation membrane that separates the first non-permeated gas into a second permeated gas and a second non-permeated gas, wherein
   the gas mixture contains a gas A and a gas B different from the gas A,
   the first separation membrane allows the gas A to preferentially permeate therethrough,
   the second separation membrane allows the gas B to preferentially permeate therethrough,
   a membrane area of the first separation membrane is smaller than a membrane area of the second separation membrane, and
   the gas separation system recovers each of the second permeated gas and the second non-permeated gas.

2. The gas separation system according to claim 1, wherein a ratio of the membrane area of the first separation membrane with respect to the membrane area of the second separation membrane is 10/90 or less.

3. The gas separation system according to claim 1, wherein a condition (i) the gas A is hydrogen and the gas B is carbon dioxide, or a condition (ii) the gas A is carbon dioxide and the gas B is hydrogen holds.

4. The gas separation system according to claim 1, wherein

   a content of the gas B in the second permeated gas is 70 vol% or more, and
   a content of the gas A in the second non-permeated gas is 70 vol% or more.

5. The gas separation system according to claim 1, wherein

   a recovery rate of the gas B by the second permeated gas is 70% or more, and
   a recovery rate of the gas A by the second non-permeated gas is 60% or more.

6. The gas separation system according to claim 1, wherein a ratio of a volume of the gas A with respect to a total value of the volume of the gas A and a volume of the gas B in the gas mixture is 25 to 75 vol%.

7. The gas separation system according to claim 1, further comprising:

   a first separation membrane unit that accommodates the first separation membrane;
   a gas mixture feed passage connected to the first separation membrane unit and configured to supply the gas mixture to the first separation membrane unit; and
   a pressurizing device that is provided to the gas mixture feed passage and increases a pressure of the gas mixture.

8. The gas separation system according to claim 1, further comprising:

   a second separation membrane unit that accommodates the second separation membrane;
   a first recovery portion that recovers the second permeated gas; and

a first recovery passage connected to the second separation membrane unit and the first recovery portion and configured to deliver the second permeated gas to the first recovery portion.

9. The gas separation system according to claim 1, further comprising:

a second separation membrane unit that accommodates the second separation membrane;
a second recovery portion that recovers the second non-permeated gas; and
a second recovery passage connected to the second separation membrane unit and the second recovery portion and configured to deliver the second non-permeated gas to the second recovery portion.

10. The gas separation system according to claim 1, wherein one of the first separation membrane and the second separation membrane includes a metal layer including a metal.

11. The gas separation system according to claim 1, wherein one of the first separation membrane and the second separation membrane includes a separation functional layer including a polyether block amide resin or an ionic liquid.

12. A method for separating a gas mixture, comprising:

a first separation step of separating, by a first separation membrane that allows a gas A to preferentially permeate therethrough, a gas mixture containing the gas A and a gas B different from the gas A into a first permeated gas and a first non-permeated gas;
a second separation step of separating, by a second separation membrane that allows the gas B to preferentially permeate therethrough, the first non-permeated gas into a second permeated gas and a second non-permeated gas; and
a recovery step of recovering each of the second permeated gas and the second non-permeated gas, wherein a membrane area of the first separation membrane is smaller than a membrane area of the second separation membrane.

FIG.1

FIG.2

FIG.3A

FIG.3B

FIG.4

FIG.5

FIG.6

FIG.7

## INTERNATIONAL SEARCH REPORT

| International application No. |
| --- |
| **PCT/JP2022/029554** |

| A. | CLASSIFICATION OF SUBJECT MATTER |
| --- | --- |

*B01D 69/00*(2006.01)i; *B01D 71/52*(2006.01)i; *B01D 71/56*(2006.01)i; *B01D 53/22*(2006.01)i
FI:   B01D53/22; B01D69/00 500; B01D71/52; B01D71/56

According to International Patent Classification (IPC) or to both national classification and IPC

| B. | FIELDS SEARCHED |
| --- | --- |

Minimum documentation searched (classification system followed by classification symbols)

B01D69/00; B01D71/52; B01D71/56; B01D53/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2018-162184 A (MITSUBISHI HEAVY INDUSTRIES, LTD.) 18 October 2018 (2018-10-18)<br>claims 1, 4, paragraphs [0023], [0052], [0053], fig. 5 | 1-12 |
| Y | JP 2013-255898 A (MITSUBISHI ELECTRIC CORP.) 26 December 2013 (2013-12-26)<br>claim 1, paragraphs [0038], [0040], [0048] | 1-12 |
| Y | JP 2008-260739 A (NORITAKE CO., LTD.) 30 October 2008 (2008-10-30)<br>claims 1-2 | 1-12 |
| Y | JP 2020-163375 A (NITTO DENKO CORP.) 08 October 2020 (2020-10-08)<br>claims 1, 10-11, paragraphs [0009], [0066] | 10-11 |
| A | JP 2019-520198 A (EVONIK SPECIALTY CHEMICALS (SHANGHAI) CO., LTD.) 18 July 2019 (2019-07-18)<br>entire text | 1-12 |
| A | JP 2009-29675 A (NIPPON OIL CORP.) 12 February 2009 (2009-02-12)<br>entire text | 1-12 |

☑ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **06 September 2022** | **27 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| PCT/JP2022/029554 |

**C. DOCUMENTS CONSIDERED TO BE RELEVANT**

| Category* | Citation of document, with indication, where appropriate, of the relevant passages | Relevant to claim No. |
|---|---|---|
| A | WO 2017/086293 A1 (RENAISSANCE ENERGY RESEARCH CORP.) 26 May 2017 (2017-05-26)<br>entire text | 1-12 |

Form PCT/ISA/210 (second sheet) (January 2015)

**INTERNATIONAL SEARCH REPORT**
Information on patent family members

International application No.

**PCT/JP2022/029554**

| Patent document cited in search report | | | Publication date (day/month/year) | Patent family member(s) | | | Publication date (day/month/year) |
|---|---|---|---|---|---|---|---|
| JP | 2018-162184 | A | 18 October 2018 | (Family: none) | | | |
| JP | 2013-255898 | A | 26 December 2013 | (Family: none) | | | |
| JP | 2008-260739 | A | 30 October 2008 | (Family: none) | | | |
| JP | 2020-163375 | A | 08 October 2020 | WO | 2020/195911 | A1 | |
| | | | | claims 1, 10-11, paragraphs [0009], [0066] | | | |
| | | | | EP | 3950102 | A1 | |
| | | | | CN | 113631245 | A | |
| | | | | KR | 10-2021-0141530 | A | |
| JP | 2019-520198 | A | 18 July 2019 | US | 2020/0316516 | A1 | |
| | | | | WO | 2017/206069 | A1 | |
| | | | | EP | 3463624 | A1 | |
| | | | | KR | 10-2019-0014551 | A | |
| | | | | CN | 109562321 | A | |
| JP | 2009-29675 | A | 12 February 2009 | US | 2010/0260657 | A1 | |
| | | | | WO | 2009/017054 | A1 | |
| | | | | EP | 2181962 | A1 | |
| | | | | CN | 101765559 | A | |
| WO | 2017/086293 | A1 | 26 May 2017 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018162184 A

**Non-patent literature cited in the description**

- **E. KAMIO et al.** *Adv.Mater,* 2017, vol. 29, 1704118